# EUROPEAN PATENT APPLICATION

(11) **EP 3 429 158 A1**
(43) Date of publication of application: **16.01.2019**
(21) Application number: 17762561.3
(22) Date of filing: 10.03.2017
(51) Int. Cl.: H04L 29/06

(54) **SECURE COMMUNICATION METHOD AND APPARATUS FOR VEHICLE, VEHICLE MULTIMEDIA SYSTEM, AND VEHICLE**

(30) Priority: 11.03.2016 CN 201610141465
(71) Applicant: BYD Company Limited, Shenzhen, Guangdong 518118 (CN)
(72) Inventor: WU, Xinfeng, Shenzhen Guangdong 518118 (CN); YIN, Jianyin, Shenzhen Guangdong 518118 (CN)
(74) Representative: Gulde & Partner
(86) International application number: PCT/CN2017/076295
(87) International publication number: WO 2017/152875

(57) **Abstract**

This application discloses a vehicle security communication method and apparatus, a vehicle multimedia system, and a vehicle. The vehicle includes an open system, a security chip and a closed system, the open system is connected to the closed system through the security chip, the method is applied to the security chip, and the method includes: receiving a first vehicle data instruction from the closed system, where the first vehicle data instruction includes original vehicle data; encrypting the original vehicle data to obtain corresponding encrypted vehicle data; and replacing the original vehicle data in the first vehicle data instruction with the encrypted vehicle data to form a second vehicle data instruction, and sending the second vehicle data instruction to the open system.

## Description

### Cross Reference of Related Application

This application is proposed based on and claims priority to China Patent Application No. 201610141465.8, filed on March 11, 2016, which is incorporated herein by reference in its entirety.

### Technical Field

This application relates to the field of Internet of vehicles, and in particular, to a vehicle secure communication method and apparatus, a vehicle multimedia system, and a vehicle.

### Related Art

With the large screen development of in-vehicle multimedia and the popularization of Internet of vehicles, 4G and WIFI hotspots, the in-vehicle multimedia gradually becomes another important mobile terminal system of car owners. The conventional vehicle closed system with a small screen gradually fails to meet the growing entertainment and multimedia requirements of users. Currently, many in-vehicle multimedia systems start to carry a 4G module and a WIFI module, so as to access the Internet and allow a customer to install preferred APPs. In addition, with the development of big data and the cloud service, there emerges a vehicle remote control technology. The in-vehicle multimedia is a carrier receiving the cloud service. However, this causes high security risks to customers, because the in-vehicle multimedia communicates with and is interconnected with other components of a vehicle. The in-vehicle multimedia will send many instructions for controlling other components of the vehicle. Once connected to the Internet, like computers and mobile phones, the in-vehicle multimedia is vulnerable to invasions of malicious programs. Law breakers will simulate a cloud server to send false instructions to the vehicle. Once the in-vehicle multimedia is invaded maliciously, the law breaker may obtain related data information of the vehicle, causing leakage of the vehicle data. Therefore, it is essential to provide necessary information security assurance when the in-vehicle multimedia accesses the Internet.

### SUMMARY

An objective of this application is to provide a vehicle secure communication method and apparatus, a vehicle multimedia system, and a vehicle, so as to improve communication security of the vehicle when the vehicle is connected to the Internet.

In order to achieve the foregoing objective, according to a first aspect of this application, a vehicle secure communication method is provided. The vehicle includes an open system, a security chip and a closed system, the open system is connected to the closed system through the security chip, the method is applied to the security chip, and the method includes: receiving a first vehicle data instruction from the closed system, where the first vehicle data instruction includes original vehicle data; encrypting the original vehicle data to obtain corresponding encrypted vehicle data; and replacing the original vehicle data in the first vehicle data instruction with the encrypted vehicle data to form a second vehicle data instruction, and sending the second vehicle data instruction to the open system.

According to a second aspect of this application, a vehicle secure communication method is provided. The vehicle includes an open system, a security chip and a closed system, the open system is connected to the closed system through the security chip, the open system is connected to a server, the method is applied to the server, and the method includes: receiving a vehicle data instruction from the open system, where the vehicle data instruction is forwarded by the open system from the security chip, and the vehicle data instruction includes encrypted vehicle data; decrypting the encrypted vehicle data in the vehicle data instruction; when the decryption succeeds, obtaining decrypted vehicle data; and processing the decrypted vehicle data.

According to a third aspect of this application, a vehicle secure communication apparatus is provided. The vehicle includes an open system, a security chip and a closed system, the open system is connected to the security chip through the closed system, the apparatus is configured on the security chip, and the apparatus includes: a first receiving module, configured to receive a first vehicle data instruction from the closed system, where the first vehicle data instruction includes original vehicle data; an encryption module, configured to encrypt the original vehicle data to obtain corresponding encrypted vehicle data; and a sending module, configured to replace the original vehicle data in the first vehicle data instruction with the encrypted vehicle data to form a second vehicle data instruction, and send the second vehicle data instruction to the open system.

According to a fourth aspect of this application, a vehicle secure communication apparatus is provided. The vehicle includes an open system, a security chip and a closed system, the open system is connected to the closed system through the security chip, the open system is connected to a server, the apparatus is configured on the server, and the apparatus includes: a second receiving module, configured to receive a vehicle data instruction from the open system, where the vehicle data instruction is forwarded by the open system from the security chip, and the vehicle data instruction includes encrypted vehicle data; a decryption module, configured to decrypt the encrypted vehicle data in the vehicle data instruction; and when the decryption succeeds, obtain decrypted vehicle data; and a processing module, configured to process the decrypted vehicle data.

According to a fifth aspect of this application, a vehicle multimedia system is provided. The vehicle multimedia system includes: a closed system, configured to collect original vehicle data and send a first vehicle data instruction including the original vehicle data; a security chip, including the vehicle secure communication apparatus according to the third aspect of this application; and an open system, where the open system is connected to the closed system through the security chip, the open system further communicates with a server, and the open system is configured to receive the second vehicle data instruction from the security chip, and forward the second vehicle data instruction to the server.

According to a sixth aspect of this application, a vehicle is provided, where the vehicle includes the vehicle multimedia system provided according to the fifth aspect of this application.

In the foregoing technical solutions, a security chip encrypts vehicle data from a closed system, an open system sends the encrypted vehicle data to a server, and the server decrypts the encrypted vehicle data. The server can obtain the vehicle data from the closed system only when the decryption succeeds. Therefore, an illegal server owner can be prevented from obtaining the vehicle information, thereby ensuring the security of the vehicle information.

Other features and advantages of this application will be described in detail in following specific implementations.

### BRIEF DESCRIPTION OF THE DRAWINGS

The accompanying drawings are used to provide further comprehension of this application, and as a part of the specification, the accompanying drawings are used for illustrating this application together with the following specific implementations, but do not limit this application. In the accompanying drawings:
FIG. 1 is a schematic diagram of an implementation environment according to an exemplary embodiment;
FIG. 2 is a structural block diagram of a vehicle multimedia system configured in a vehicle according to an exemplary embodiment;
FIG. 3 is a flowchart of a vehicle secure communication method according to an exemplary embodiment;
FIG. 4 is a flowchart of another vehicle secure communication method according to an exemplary embodiment;
FIG. 5 is a diagram of signaling interaction among a user terminal, a server, an open system, a security chip, and a closed system in a vehicle communication process according to an exemplary embodiment;
FIG. 6A is a schematic composition diagram of an example of a first control instruction;
FIG. 6B is a schematic composition diagram of another example of a first control instruction;
FIG. 6C is a schematic composition diagram of an example of a second control instruction;
FIG. 7 is a flowchart of a vehicle secure communication method according to another exemplary embodiment;
FIG. 8 is a schematic composition diagram of an example of a first vehicle data instruction;
FIG. 9 is a flowchart of another vehicle secure communication method according to another exemplary embodiment;
FIG. 10 is a diagram of signaling interaction among a server, an open system, a security chip, and a closed system during a vehicle communication process according to another exemplary embodiment;
FIG. 11A is a schematic composition diagram of another example of a first vehicle data instruction;
FIG. 11B is a schematic composition diagram of an example of a second vehicle data instruction;
FIG. 11C is a schematic composition diagram of another example of a first vehicle data instruction;
FIG. 12 is a block diagram of a vehicle secure communication apparatus according to an exemplary embodiment; and
FIG. 13 is a block diagram of a vehicle secure communication apparatus according to another exemplary embodiment.

### DETAILED DESCRIPTION

Specific implementations of this application are described in detail below with reference to the accompanying drawings. It should be understood that the specific implementations described herein are merely used for describing and illustrating this application rather than limiting this application.

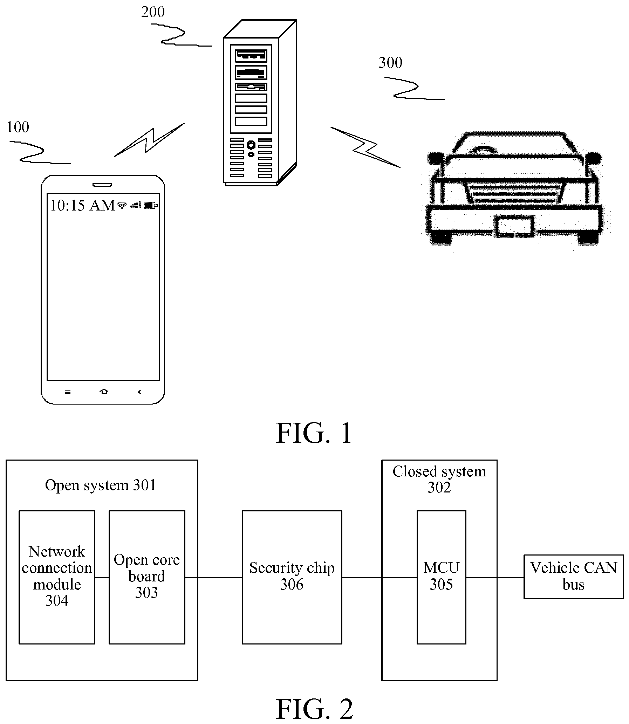

FIG. 1 is a schematic diagram of an implementation environment according to an exemplary embodiment. As shown in FIG. 1, the implementation environment may include a user terminal 100, a server 200 and a vehicle 300.

In this application, the server 200 may be an electronic device that serves the vehicle 300, and may be owned by a service provider of the vehicle 300. A user can register on the server 200 by using the user terminal 100, so that the user terminal 100 is associated with the vehicle 300. In this way, the user terminal 100 can communicate with the vehicle 300 through the server 200, so that the user can control the vehicle 300 remotely. In addition, the vehicle 300 can also feed back related data of the vehicle to the server 200, so that the service provider can conveniently maintain the vehicle 300 remotely. In addition, if necessary, the server 200 can further feed back the related data of the vehicle to the user terminal 100, so that the user can learn the vehicle status at any time.

In this application, the user terminal 100 may be an electronic device that can be connected to the Internet and communicate with the server 200. For example, the user terminal 100 may be a smart phone, a tablet computer, a PC, or a notebook computer. In FIG. 1, the user terminal 100 being a smart phone is used as an example.

In order to improve the security when the vehicle 300 is connected to the Internet, in an embodiment of this application, a vehicle multimedia system having dual sub-systems is configured in the vehicle 300. FIG. 2 is a structural block diagram of a vehicle multimedia system configured in a vehicle according to an exemplary embodiment. As shown in FIG. 2, the vehicle multimedia system may include: an open system 301 and a closed system 302. The open system 301 is configured to connect the vehicle 300 to the Internet, communicate with an external device (such as a server 200), and allow a user to install various APPs according to preferences of the user. For example, an open core board 303 and a network connection module 304 (the network connection module 304 may be, for example, a WiFi module, a GPS module, a 3G module or a 4G module) may be configured in the open system 301. The open core board 303 is connected to the network connection module 304 and can be connected to the Internet by using the network connection module 304, so as to communicate with an external device (such as the server 200).

The closed system 302 is not allowed to access the Internet, and is configured to perform interactive communication with the vehicle. For example, a micro control unit (MCU) 305 of the vehicle 300 may be configured in the closed system 302. The MCU 305 can be connected to a CAN bus of the vehicle. Through the CAN bus, the MCU 305 can control operations of the vehicle and obtain vehicle data from the CAN bus. The open system 301 and the closed system 302 can run independently. In addition, the open system 301 can be connected to the closed system 302 through a security chip 306. For example, the open core board 303 is connected to the MCU 305 through the security chip 306. The open core board 303 can be connected to the security chip 306 through a secure digital input and output (SDIO) interface. The security chip 306 can be connected to the MCU 305 through a serial peripheral interface (SPI) standard interface. In an exemplary implementation of this application, the security chip 306 may be an SSX1207-type security chip, and can provide services such as data encryption, identity authentication, and limited secure storage. The security chip 306 can improve the security of the vehicle when the vehicle is connected to the Internet.

It should be noted that, as an example, both the open system 301 and the closed system 302 in this application may be an operating system. For example, the open system 301 may be an Android system, and the closed system 302 may be a Linux system. It should be understood that, the example is merely used for illustrating the open system 301 and the closed system 302, but cannot limit the two systems. For example, the open system 301 may be a Linux system, and the closed system 302 may be an Android system; or the two systems both may be Android systems.

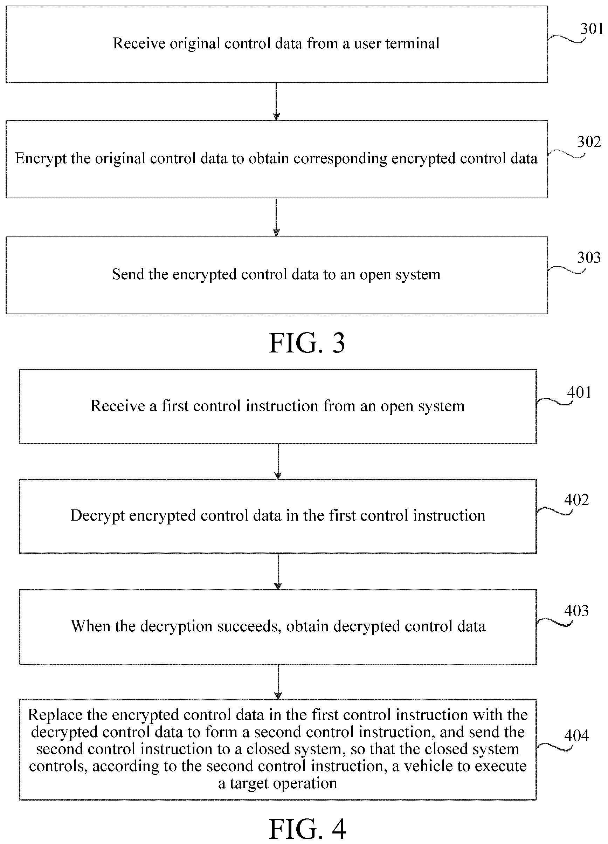

FIG. 3 is a flowchart of a vehicle secure communication method according to an exemplary embodiment. The method may be applied to a server, for example, the server 200 shown in FIG. 1. As shown in FIG. 3, the method may include the following steps.

In step S301, original control data from a user terminal is received, where the original control data is used for indicating a target operation to be executed by a vehicle.

In this application, for example, the target operation may include, but is not limited to, the following operations: unlocking, starting, acceleration, deceleration, stalling, locking, car window lifting, multimedia device control (starting, volume adjustment, and multimedia file switching), and the like.

In step S302, the original control data is encrypted to obtain corresponding encrypted control data.

The server and the security chip may agree on an encryption protocol in advance. In this way, the server can encrypt the received original control data according to the encryption protocol, and obtain encrypted control data.

In step S303, the encrypted control data is sent to an open system.

After receiving the encrypted control data, the open system can generate a first control instruction, and add the received encrypted control data to the first control instruction. After that, the open system sends the first control instruction to the security chip, so that the security chip performs security authentication on the encrypted control data.

FIG. 4 is a flowchart of another vehicle secure communication method according to an exemplary embodiment. The method may be applied to a security chip, such as the security chip 306 shown in FIG. 2. As shown in FIG. 4, the method may include the following steps.

In step S401, a first control instruction from an open system is received, where the first control instruction includes encrypted control data.

In step S402, the encrypted control data in the first control instruction is decrypted.

As described above, the server and the security chip may agree on an encryption protocol in advance. In this way, the security chip can decrypt the encrypted control data in the received first control instruction according to the encryption protocol.

In step S403, when the decryption succeeds, decrypted control data is obtained.

In step S404, the encrypted control data in the first control instruction is replaced with the decrypted control data to form a second control instruction, and the second control instruction is sent to a closed system, so that the closed system controls, according to the second control instruction, a vehicle to execute a target operation.

For example, assuming that the original control data received by the server from the user terminal is used for indicating, to the vehicle, that the target operation to be executed is an unlocking operation, if the security chip decrypts the encrypted control data successfully, the second control instruction sent by the security chip to the closed system can also indicate, to the vehicle, that the target operation to be executed is an unlocking operation. After receiving the second control instruction, the closed system (such as an MCU) can learn, by parsing the second control instruction, that the target operation is an unlocking operation. After that, the closed system can send the unlocking instruction to a CAN bus. An unlocking component in the vehicle can obtain the unlocking instruction from the CAN bus, and executes the unlocking operation according to the unlocking instruction, thereby completing the unlocking operation for the vehicle.

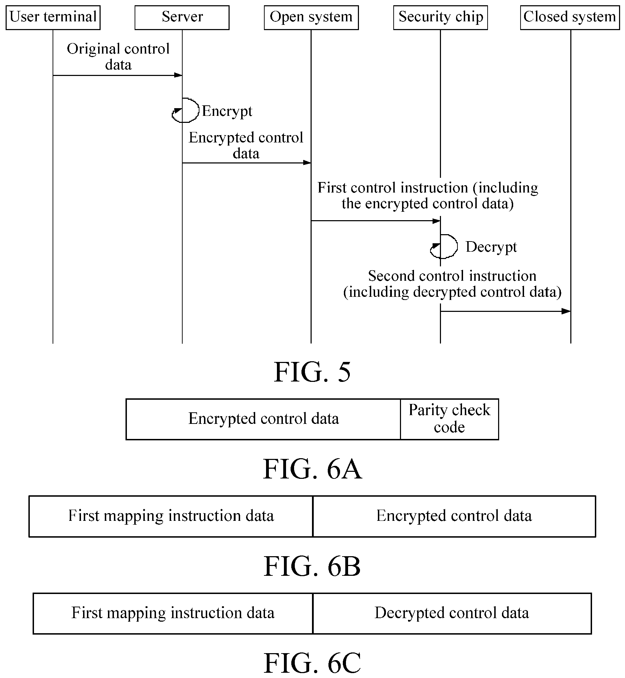

FIG. 5 is a diagram of signaling interaction among a user terminal, a server, an open system, a security chip, and a closed system in a vehicle communication process according to an exemplary embodiment. The user terminal is, for example, the user terminal 100 shown in FIG. 1. The server is, for example, the server 200 shown FIG. 1. The open system is, for example, the open system 301 shown in FIG. 2. The security chip is, for example, the security chip 306 shown in FIG. 2. The closed system is, for example, the closed system 302 shown in FIG. 2. FIG. 5 relates to steps in the foregoing vehicle secure communication methods applied to the server and the security chip. Therefore, a specific signaling interaction process in FIG. 5 is not described in detail again herein.

In addition, although not shown in FIG. 4, the following step may also be included in the vehicle secure communication method applied to the security chip: when the decryption fails, skip sending any control instruction to the closed system. In other words, once the decryption fails, the security chip can intercept the instruction from the open system. For example, when a malicious program invades the open system and simulates the open system to send a control instruction, due to the protection function of the security chip, the control instruction will not be sent to the closed system, thereby ensuring the security of the closed system and the vehicle.

In the foregoing technical solution, encrypted control data is sent to the open system of the vehicle by using the server. The encrypted control data can be forwarded to the security chip through the open system, and is decrypted by the security chip. Control data obtained through decryption will be sent to the closed system only when the decryption succeeds. In this case, the closed system will control, according to the control data, the vehicle to execute a corresponding operation. In this way, the communication security of the vehicle can be improved when the vehicle is connected to the Internet. It is ensured that only legal control data will be sent to the closed system. False control over the vehicle due to invasion of a malicious program is prevented, thereby ensuring the security of vehicle remote control.

In some optional implementations, the security chip may count the number of decryption failures. When the number of decryption failures reaches a preset number of times (for example, the number is greater than or equal to 1), it indicates that the open system possibly has a high security risk currently. In this case, the security chip can send a restart instruction and/or virus killing instruction to the open system. The restart instruction can be used for controlling the open system to perform a restart operation. The virus killing instruction can be used for controlling the open system to perform a virus killing operation. In this way, the security risk of the open system can be alleviated to some extent, preventing the malicious program from threatening the security of the open system for a long time.

In addition, in some optional implementations, the server can further calculate a parity check code of the original control data after receiving the original control data. Then, the server sends the parity check code to the open system. After receiving the parity check code of the original control data, the open system can add the parity check code and the encrypted control data together to the first control instruction. For example, the composition of the first control instruction in this case may be as shown in FIG. 6A. After receiving the first control instruction, the security chip can first decrypt the encrypted control data in the instruction. If the decryption succeeds, the decrypted control data can be obtained. Then, the security chip can calculate a parity check code of the decrypted control data. Theoretically, the decrypted control data should be the same as the original control data, and therefore, the parity check codes thereof should also be the same. When the parity check code included in the first control instruction is the same as the parity check code of the decrypted control data, the security chip can further determine that the received first control instruction is a legal instruction. Therefore, the security chip can replace the encrypted control data in the first control instruction with the decrypted control data to form a second control instruction, and send the second control instruction to the closed system. When the parity check code included in the first control instruction is not the same as the parity check code of the decrypted control data, the security chip can determine that the received first control instruction is an illegal instruction. In this case, the security chip can intercept the instruction and no longer send any instruction to the closed system, thereby ensuring the security of the vehicle.

Through the foregoing implementation, the accuracy of identification on legal instructions can be further improved, and the possibility of identifying an illegal instruction as a legal instruction by mistake is reduced, thereby further improving the security of the vehicle.

As described above, the user can send original control data to the server by using the user terminal. The original control data can be used for indicating, to the vehicle, a target operation to be executed. In some implementations of this application, different target operations may have different security levels, and the security level of the target operation can be used for indicating whether the target operation is a sensitive operation

In an implementation, the server can directly encrypt the original control data regardless of the security level of the target operation indicated by the original control data. Alternatively, in another implementation, the server can selectively encrypt the original control data according to whether the target operation indicated by the original control data is a sensitive operation.

For example, after receiving the original control data, the server can determine security level information of the original control data according to the target operation indicated by the original control data, where the security level information can be used for indicating whether the original control data is sensitive data. For example, a sensitive operation list may be stored in the server in advance. In this way, after receiving the original control data, the server can obtain target operation information by parsing the original control data. Then, the server can query the sensitive operation list. If the target operation information is found in the sensitive operation list, it indicates that the target operation is a sensitive operation. Correspondingly, the original control data is sensitive data. If the target operation is not found in the sensitive operation list, it indicates that the target operation is non-sensitive operation. Correspondingly, the original control data is non-sensitive data.

The server encrypts the original control data only when the security level information of the original control data indicates that the original control data is sensitive data, to obtain corresponding encrypted control data. In other words, the encryption processing operation is only performed for sensitive data. When the security level information of the original control data indicates that the original control data is non-sensitive data, the server may not encrypt the original control data, and directly send the original control data to the open system.

When sending the encrypted control data or the original control data to the open system, the server can also send the security level information of the original control data to the open system at the same time. For example, the server attaches the security level information of the original control data to the header of the encrypted control data or the original control data to form a piece of signaling, and then sends the signaling to the open system. In this way, after receiving the signaling, the open system parses header information, and can determine whether the control information included in the signaling is encrypted or unencrypted (that is, original). When the security level information of the original control data indicates that the original control data is sensitive data, the open system generates a first control instruction and sends the first control instruction to the security chip. The first control instruction may include: the security level information of the original control data and the encrypted control data. When the security level information of the original control data indicates that the original control data is non-sensitive data, the open system can generate a third control instruction and send the third control instruction to the security chip. The third control instruction may include: the security level information of the original control data and the original control data. After receiving a control instruction from the open system, the security chip can learn, according to the security level information included in the control instruction, whether the control data included in the instruction is encrypted. If yes, the security chip determines that the received instruction is the first control instruction, and performs decryption processing according to the method shown in FIG. 4; if not, the security chip determines that the received instruction is the third control instruction, and in this case, the security chip may directly send the third control instruction to the closed system without performing decryption processing.

After the second control instruction or the third control instruction is sent to the closed system, the MCU in the closed system can learn, in a plurality of manners, a specific target operation that the control data in the instruction is intended to control the vehicle to execute. For example, in an implementation, after receiving the second control instruction from the security chip, the MCU in the closed system can extract the decrypted control data from the second control instruction. A control data-operation mapping table may be stored in the MCU in advance. The mapping table records at least one type of operation and corresponding control data corresponding to each type of operation. The MCU can query the mapping table by using the extracted decrypted control data, so as to learn the corresponding operation from the mapping table. This operation is the target operation to be executed by the vehicle.

Alternatively, in another implementation, the server may generate first mapping instruction data after obtaining the target operation by parsing the original control data. The first mapping instruction data can be used for identifying the target operation. Then, the server can send the first mapping instruction data to the open system. In this way, the open system can add the first mapping instruction data to the first control instruction. For example, the composition of the first control instruction formed in this case is shown in FIG. 6B. In this way, when the decryption performed by the security chip succeeds, the first mapping instruction data can be retained in the formed second control instruction. For example, the composition of the second control instruction formed in this case is shown in FIG. 6C. After receiving the second control instruction, the MCU in the closed system can extract the first mapping instruction data from the second control instruction, and learn the target operation to be executed by the vehicle.

After learning the target operation to be executed by the vehicle, the MCU can send the decrypted control data included in the second control instruction to the CAN bus, so that a corresponding component obtains the decrypted control data from the CAN bus and then executes the corresponding target operation.

The process of interaction between the open system and the security chip may be interfered in some cases. As a result, the first control instruction received by the security chip may be incomplete, causing a subsequent security authentication failure. In order to avoid such a case, in an optional implementation of this application, before decrypting the encrypted control data in the first control instruction, the security chip may first determine whether transmission of the first control instruction is normal. The security chip decrypts the encrypted control data in the first control instruction only when it is determined that transmission of the first control instruction is normal.

For example, before sending the first control instruction to the security chip, the open system first calculates a parity check code of the first control instruction, attaches the parity check code to the tail of the first control instruction to form a piece of signaling, and sends the signaling to the security chip. After receiving the signaling, the security chip can extract information except tail information, and calculate a parity check code of the information. When the calculated parity check code is the same as the parity check code included in the tail information, it indicates that transmission of the first control instruction is normal. Otherwise, it indicates that transmission of the first control instruction is abnormal.

When it is determined that transmission of the first control instruction is abnormal, the security chip may send a first retransmission instruction to the open system. The first retransmission instruction can be used for instructing the open system to retransmit the first control instruction.

Through this implementation, it can be avoided that the security chip fails to decrypt the originally legal first control instruction due to interference in transmission. In this way, the accuracy and reliability of security authentication can be further improved.

Described above is the process of interaction among the user terminal, the server, the open system, the security chip and the closed system when the user intends to control the operation of the vehicle remotely by using the user terminal. In other implementations of this application, the closed system can also feed back vehicle data to the server through the security chip and the open system, as described below.

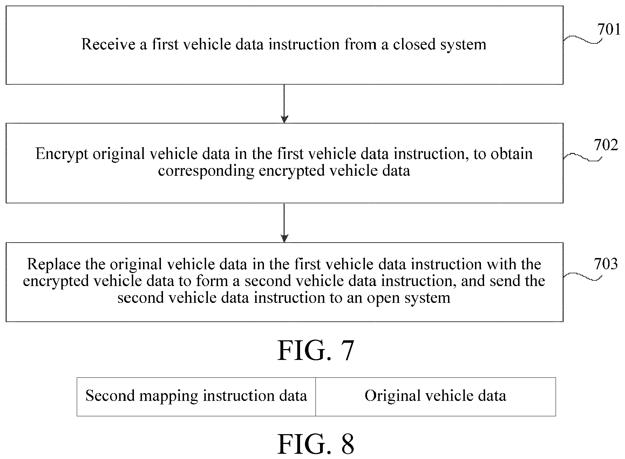

FIG. 7 is a flowchart of a vehicle secure communication method according to another exemplary embodiment. The method may be applied to a security chip, for example, the security chip 306 shown in FIG. 2. As shown in FIG. 7, the method may include the following steps.

In step S701, a first vehicle data instruction from a closed system (such as the closed system 302 shown in FIG. 2) is received, where the first vehicle data instruction includes original vehicle data.

An MCU in the closed system can obtain original vehicle data from a CAN bus. The original vehicle data may include various types of vehicle data, for example, execution result data for a target operation after the vehicle executes the target operation, or vehicle data that is fed back in response to an external request (for example, a data obtaining request from the server), or vehicle data proactively reported by the vehicle to the server. For example, after the vehicle completes an unlocking operation, an unlocking component can feed back an unlocking result to the CAN bus. In this case, the MCU can detect the data on the CAN bus and generate a first vehicle data instruction. Then, the data is added to the first vehicle data instruction as original vehicle data, and is sent to the security chip.

Optionally, after detecting the data, the MCU may further generate second mapping instruction data. The second mapping instruction data can be used for identifying the type of the original vehicle data. For example, assuming that the MCU detects the unlocking result data from the unlocking component, the second mapping instruction data generated by the MCU can be used for identifying that the type of the original vehicle data is an unlocking result. The MCU may add the second mapping instruction data to the first vehicle data instruction, for example, the first vehicle data instruction as shown in FIG. 8, so that when the first vehicle data instruction is transmitted to the server subsequently, the server can learn the type of the original vehicle data according to the second mapping instruction data, thereby performing corresponding processing.

In step S702, the original vehicle data is encrypted to obtain corresponding encrypted vehicle data.

As described above, the server and the security chip may agree on an encryption protocol in advance. In this way, the security chip can encrypt the original vehicle data in the received first vehicle data instruction according to the encryption protocol, and obtain encrypted vehicle data.

In step S703, the original vehicle data in the first vehicle data instruction is replaced with the encrypted vehicle data to form a second vehicle data instruction, and the second vehicle data instruction is sent to an open system.

After receiving the second vehicle data instruction from the security chip, the open system can forward the second vehicle data instruction to the server, so that the server decrypts the second vehicle data instruction.

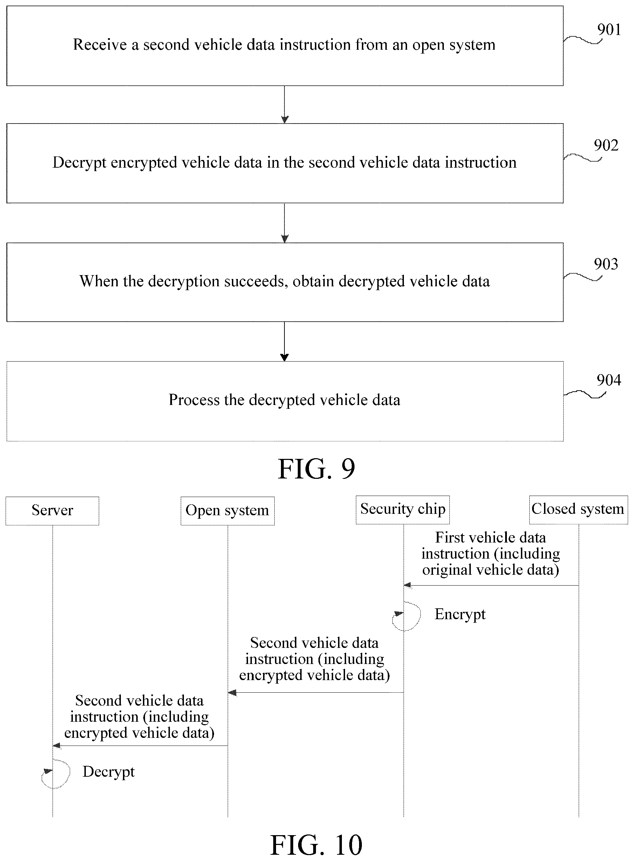

FIG. 9 is a flowchart of another vehicle secure communication method according to another exemplary embodiment. The method may be applied to a server, for example, the server 200 shown in FIG. 1. As shown in FIG. 9, the method may include the following steps.

In step S901, a second vehicle data instruction from an open system is received, where the second vehicle data instruction is forwarded by the open system from the security chip, and the second vehicle data instruction includes encrypted vehicle data.

In step S902, the encrypted vehicle data in the second vehicle data instruction is decrypted.

As described above, the server and the security chip may agree on an encryption protocol in advance. In this way, the server can decrypt the encrypted vehicle data in the received second vehicle data instruction according to the encryption protocol.

In step S903, when the decryption succeeds, decrypted vehicle data is obtained.

In step S904, the decrypted vehicle data is processed. For example, the processing may include, but is not limited to: storing, displaying, forwarding to a user terminal, and the like. For example, when the original vehicle data is execution result data for the target operation, after succeeding in decryption and obtaining the decrypted vehicle data, the server may send the decrypted vehicle data to the user terminal, to inform a user of an execution result.

FIG. 10 is a diagram of signaling interaction among a server, an open system, a security chip and a closed system in a vehicle communication process according to another exemplary embodiment. The server is, for example, the server 200 shown FIG. 1. The open system is, for example, the open system 301 shown in FIG. 2. The security chip is, for example, the security chip 306 shown in FIG. 2. The closed system is, for example, the closed system 302 shown in FIG. 2. FIG. 10 relates to steps in the foregoing vehicle secure communication methods applied to the server and the security chip. Therefore, a specific signaling interaction process in FIG. 10 is not described in detail again herein.

In the foregoing technical solution, the security chip encrypts vehicle data from the closed system, the open system sends the encrypted vehicle data to the server, and the server decrypts the encrypted vehicle data. The server can obtain the vehicle data from the closed system only when the decryption succeeds. In this way, an illegal server owner can be prevented from learning vehicle information, thereby ensuring the security of the vehicle information.

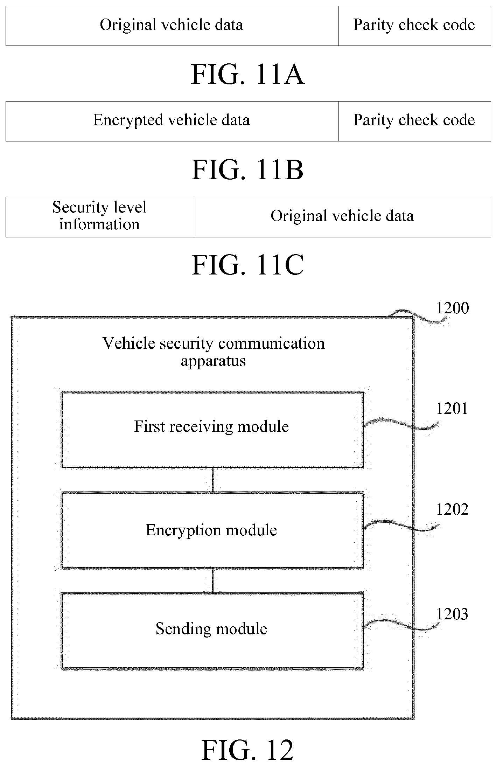

In some optional implementations, after obtaining the original vehicle data, the MCU in the closed system may calculate a parity check code of the original vehicle data. Then, the closed system may add the parity check code and the original vehicle data to the first vehicle data instruction. For example, the composition of the first vehicle data instruction in this case may be as shown in FIG. 11A. After receiving the first vehicle data instruction, the security chip may first encrypt the original vehicle data therein to obtain encrypted vehicle data. Then, the security chip replaces the original vehicle data in the first vehicle data instruction with the encrypted vehicle data to form a second vehicle data instruction. For example, the composition of the second vehicle data instruction in this case may be as shown in FIG. 11B. The security chip sends the second vehicle data instruction to the open system. After the open system forwards the second vehicle data instruction to the server, the server may first decrypt the encrypted vehicle data therein. If the decryption succeeds, the server can obtain decrypted vehicle data. Theoretically, the decrypted vehicle data should be the same as the original vehicle data. Therefore, the parity check codes of the decrypted vehicle data and the original vehicle data should be the same. When the parity check code included in the second vehicle data instruction is the same as the parity check code of the decrypted vehicle data, the server can determine that the received second vehicle data instruction is a legal instruction, and the decrypted vehicle data in the instruction is authenticate vehicle data from the vehicle. In this case, the decrypted vehicle data can be processed.

In addition, in some optional implementations, the original vehicle data obtained by the MCU in the closed system may have different security levels, where the security level information can be used for indicating whether the original vehicle data is sensitive data. In this case, after generating the first vehicle data instruction, the MCU may add the security level information of the original vehicle data to the first vehicle data instruction. For example, the composition of the first vehicle data instruction in this case may be as shown in FIG. 11C. In this way, after receiving the first vehicle data instruction, the security chip may determine, according to the security level information, whether the original vehicle data is sensitive data. In an implementation, the security chip can encrypt the original vehicle data regardless of the security level of the original vehicle data. Alternatively, in another implementation, the security chip can encrypt the original vehicle data in the first vehicle data instruction only when the security level information indicates that the original vehicle data is sensitive data, to obtain encrypted vehicle data. In other words, the encryption processing operation is only performed for the sensitive data. When the security level information of the original vehicle data indicates that the original vehicle data is non-sensitive data, the security chip may not encrypt the original vehicle data.

When the security level information of the original vehicle data indicates that the original vehicle data is sensitive data, the security chip may generate a second vehicle data instruction, where the second vehicle data instruction may include the security level information of the original vehicle data and the encrypted vehicle data. When the security level information of the original vehicle data indicates that the original vehicle data is non-sensitive data, the security chip may directly forward the first vehicle data instruction to the open system. After receiving the vehicle data instruction forwarded by the open system, the server may determine, by parsing the security level information in the vehicle data instruction, whether the vehicle data included in the vehicle data instruction is encrypted or unencrypted (that is, original). When the security level information indicates that the original vehicle data is sensitive data, the server can determine that the second vehicle data instruction is received and decrypt the encrypted vehicle data therein. When the security level information indicates that the original vehicle data is non-sensitive data, the server can determine that the first vehicle data instruction is received, and can directly process the original vehicle data therein.

In addition, the process of interaction between the server and the open system, the process of interaction between the open system and the security chip, and the process of interaction between the security chip and the MCU in the closed system may be interfered in some cases. As a result, the first vehicle data instruction received by the security chip may be incomplete, or the vehicle data instruction forwarded by the open system and received by the server may be incomplete, causing a subsequent decryption failure. In order to avoid such a case, in an optional implementation of this application, before encrypting the original vehicle data in the first vehicle data instruction, the security chip may first determine whether transmission of the first vehicle data instruction is normal. The security chip encrypts the original vehicle data in the first vehicle data instruction only when it is determined that transmission of the first vehicle data instruction is normal.

For example, before sending the first vehicle data instruction to the security chip, the closed system first calculates a parity check code of the first vehicle data instruction, and attaches the parity check code to the tail of the first vehicle data instruction to form a piece of signaling, and sends the signaling to the security chip. After receiving the signaling, the security chip may extract information except tail information and calculate a parity check code of the information. When the calculated parity check code is the same as the parity check code included in the tail information, it indicates that transmission of the first vehicle data instruction is normal. Otherwise, it indicates that transmission of the first vehicle data instruction is abnormal.

When determining that transmission of the first vehicle data instruction is abnormal, the security chip may send a second retransmission instruction to the closed system. The second retransmission instruction may be used for instructing the closed system to retransmit the first vehicle data instruction.

In addition, on the server side, before decrypting the encrypted vehicle data in the received second vehicle data instruction, the server may first determine whether transmission of the second vehicle data instruction is normal. The server decrypts the encrypted vehicle data in the second vehicle data instruction only when it is determined that the transmission of the second vehicle data instruction is normal.

For example, before sending the second vehicle data instruction to the open system, the security chip may first calculate a parity check code of the second vehicle data instruction, attach the parity check code to the tail of the second vehicle data instruction to form a piece of signaling, and send the signaling to the open system. After receiving the signaling, the open system may extract information except tail information, and calculate a parity check code of the information. When the calculated parity check code is the same as the parity check code included in the tail information, it indicates that transmission of the second vehicle data instruction between the security chip and the open system is normal. Otherwise, it indicates that transmission of the second vehicle data instruction between the security chip and the open system is abnormal.

When transmission of the second vehicle data instruction between the security chip and the open system is normal, the open system may directly forward the signaling to the server. After receiving the signaling, the server may extract information except the tail information, and calculate a parity check code of the information. When the calculated parity check code is the same as the parity check code included in the tail information, it indicates that transmission of the second vehicle data instruction between the server and the open system is normal. Otherwise, it indicates that transmission of the second vehicle data instruction between the server and the open system is abnormal.

When transmission of the second vehicle data instruction between the security chip and the open system is abnormal, the open system may send a third retransmission instruction to the security chip. The third retransmission instruction is used for instructing the security chip to retransmit the second vehicle data instruction. When transmission of the second vehicle data instruction between the server and the open system is abnormal, the server may send a fourth retransmission instruction to the open system. The fourth retransmission instruction is used for instructing the open system to retransmit the second vehicle data instruction.

Through this implementation, it can be avoided that the server fails to decrypt the originally legal second vehicle data instruction due to interference in transmission. In this way, the accuracy and reliability of security authentication can be further improved.

FIG. 12 is a block diagram of a vehicle secure communication apparatus 1200 according to an exemplary embodiment, where the apparatus 1200 may be configured in a security chip, for example, the security chip 306 shown in FIG. 2. As shown in FIG. 12, the apparatus 1200 may include: a first receiving module 1201, configured to receive a first vehicle data instruction from a closed system, where the first vehicle data instruction includes original vehicle data; an encryption module 1202, configured to encrypt the original vehicle data to obtain corresponding encrypted vehicle data; and a sending module 1203, configured to replace the original vehicle data in the first vehicle data instruction with the encrypted vehicle data to form a second vehicle data instruction, and send the second vehicle data instruction to the open system.

Optionally, the first vehicle data instruction further includes security level information of the original vehicle data, the security level information being used for indicating whether the original vehicle data is sensitive data. The encryption module 1202 is configured to: when the security level information indicates that the original vehicle data is sensitive data, encrypt the original vehicle data in the first vehicle data instruction to obtain corresponding encrypted vehicle data.

Optionally, the apparatus 1200 may further include: a first determining module, configured to determine whether transmission of the first vehicle data instruction is normal. The encryption module 1202 is configured to: when it is determined that transmission of the first vehicle data instruction is normal, encrypt the original vehicle data in the first vehicle data instruction to obtain corresponding encrypted vehicle data.

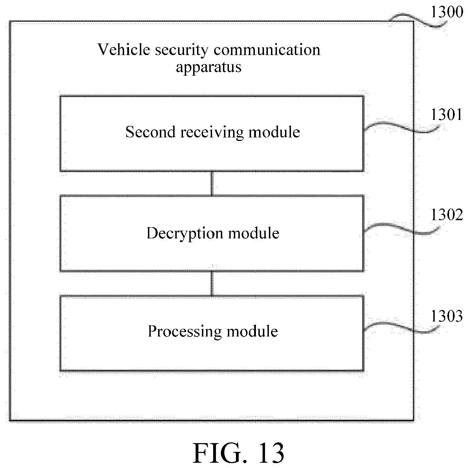

FIG. 13 is a block diagram of another vehicle secure communication apparatus 1300 according to an exemplary embodiment, where the apparatus 1300 may be configured in a server, for example, the server 200 shown in FIG. 1. As shown in FIG. 13, the apparatus 1300 may include: a second receiving module 1301, configured to receive a vehicle data instruction from an open system, where the vehicle data instruction is forwarded by the open system from a security chip, and the vehicle data instruction includes encrypted vehicle data; a decryption module 1302, configured to decrypt the encrypted vehicle data in the vehicle data instruction; and when the decryption succeeds, obtain decrypted vehicle data; and a processing module 1303, configured to process the decrypted vehicle data.

Optionally, the vehicle data instruction further includes a parity check code associated with original vehicle data corresponding to the encrypted vehicle data before encryption. The apparatus 1300 may further include: a calculation module, configured to calculate a parity check code of the decrypted vehicle data. The processing module 1303 is configured to: when the parity check code included in the vehicle data instruction is the same as the parity check code of the decrypted vehicle data, process the decrypted vehicle data.

Optionally, the apparatus 1300 may further include: a second determining module, configured to determine whether transmission of the vehicle data instruction is normal. The decryption module 1302 is configured to: when it is determined that transmission of the vehicle data instruction is normal, decrypt the encrypted vehicle data in the vehicle data instruction.

In the foregoing technical solution, the security chip encrypts vehicle data from the closed system, the open system sends the encrypted vehicle data to the server, and the server decrypts the encrypted vehicle data. The server can obtain the original vehicle data from the closed system only when the decryption succeeds. In this way, an illegal server owner can be prevented from learning vehicle information, thereby ensuring the security of the vehicle information.

Specific operation execution manners of the modules in the apparatus in the foregoing embodiment have been described in detail in the embodiment about the method, and details will not be described herein again.

Preferred implementations of this application are described in detail above with reference to the accompanying drawings. However, this application is not limited to the specific details in the foregoing implementations. In the scope of the technical thinking of this application, many simple modifications can be performed on the technical solution of this application, and the simple modifications all belong to the protection scope of this application.

It should be additionally noted that the specific technical features described in the foregoing specific implementations can be combined in any suitable manner when they do not conflict with each other. In order to avoid unnecessary repetition, various possible combination manners are not described additionally in this application.

In addition, various different implementations of this application may also be combined randomly. The combinations should also be regarded as the disclosure of this application as long as the combinations do not violate the idea of this application.

## Claims

1. A vehicle secure communication method, wherein the vehicle comprises an open system, a security chip and a closed system, the open system is connected to the closed system through the security chip, the method is applied to the security chip, and the method comprises:
receiving a first vehicle data instruction from the closed system, wherein the first vehicle data instruction comprises original vehicle data;
encrypting the original vehicle data to obtain corresponding encrypted vehicle data; and
replacing the original vehicle data in the first vehicle data instruction with the encrypted vehicle data to form a second vehicle data instruction, and sending the second vehicle data instruction to the open system.

2. The method according to claim 1, wherein the first vehicle data instruction further comprises a parity check code associated with the original vehicle data.

3. The method according to claim 1, wherein the first vehicle data instruction further comprises security level information of the original vehicle data, the security level information being used for indicating whether the original vehicle data is sensitive data;
the encrypting the original vehicle data in the first vehicle data instruction to obtain corresponding encrypted vehicle data comprises:
when the security level information indicates that the original vehicle data is sensitive data, encrypting the original vehicle data to obtain corresponding encrypted vehicle data.

4. The method according any of claims 1 to 3, further comprising:
determining whether transmission of the first vehicle data instruction is normal; and
the encrypting the original vehicle data to obtain corresponding encrypted vehicle data comprises:
when it is determined that transmission of the first vehicle data instruction is normal, encrypting the original vehicle data to obtain corresponding encrypted vehicle data.

5. A vehicle secure communication method, wherein the vehicle comprises an open system, a security chip and a closed system, the open system is connected to the closed system through the security chip, the open system is connected to a server, the method is applied to the server, and the method comprises:
receiving a vehicle data instruction from the open system, wherein the vehicle data instruction is forwarded by the open system from the security chip, and the vehicle data instruction comprises encrypted vehicle data;
decrypting the encrypted vehicle data in the vehicle data instruction;
when the decryption succeeds, obtaining decrypted vehicle data; and
processing the decrypted vehicle data.

6. The method according to claim 5, wherein the vehicle data instruction further comprises a parity check code associated with original vehicle data corresponding to the encrypted vehicle data before encryption;
the method further comprises:
calculating a parity check code of the decrypted vehicle data; and
the processing the decrypted vehicle data comprises:
when the parity check code comprised in the vehicle data instruction is the same as the parity check code of the decrypted vehicle data, processing the decrypted vehicle data.

7. The method according to claim 5 or 6, further comprising:
determining whether transmission of the vehicle data instruction is normal; and
the decrypting the encrypted vehicle data in the vehicle data instruction comprises:
when it is determined that transmission of the vehicle data instruction is normal, decrypting the encrypted vehicle data in the vehicle data instruction.

8. A vehicle secure communication apparatus, wherein the vehicle comprises an open system, a security chip and a closed system, the open system is connected to the security chip through the closed system, the apparatus is configured on the security chip, and the apparatus comprises:
a first receiving module, configured to receive a first vehicle data instruction from the closed system, wherein the first vehicle data instruction comprises original vehicle data;
an encryption module, configured to encrypt the original vehicle data to obtain corresponding encrypted vehicle data; and
a sending module, configured to replace the original vehicle data in the first vehicle data instruction with the encrypted vehicle data to form a second vehicle data instruction, and send the second vehicle data instruction to the open system.

9. The apparatus according to claim 8, wherein the first vehicle data instruction further comprises a parity check code associated with the original vehicle data.

10. The apparatus according to claim 8, wherein the first vehicle data instruction further comprises security level information of the original vehicle data, the security level information being used for indicating whether the original vehicle data is sensitive data;
the encryption module is configured to: when the security level information indicates that the original vehicle data is sensitive data, encrypt the original vehicle data in the first vehicle data instruction to obtain corresponding encrypted vehicle data.

11. The apparatus according to any of claims 8 to 10, further comprising:
a first determining module, configured to determine whether transmission of the first vehicle data instruction is normal;
wherein the encryption module is configured to: when it is determined that transmission of the first vehicle data instruction is normal, encrypt the original vehicle data in the first vehicle data instruction to obtain corresponding encrypted vehicle data.

12. A vehicle secure communication apparatus, wherein the vehicle comprises an open system, a security chip and a closed system, the open system is connected to the closed system through the security chip, the open system is connected to a server, the apparatus is configured on the server, and the apparatus comprises:
a second receiving module, configured to receive a vehicle data instruction from the open system, wherein the vehicle data instruction is forwarded by the open system from the security chip, and the vehicle data instruction comprises encrypted vehicle data;
a decryption module, configured to decrypt the encrypted vehicle data in the vehicle data instruction; and when the decryption succeeds, obtain decrypted vehicle data; and
a processing module, configured to process the decrypted vehicle data.

13. The apparatus according to claim 12, wherein the vehicle data instruction further comprises a parity check code associated with original vehicle data corresponding to the encrypted vehicle data before encryption;
the apparatus further comprises:
a calculation module, configured to calculate a parity check code of the decrypted vehicle data;
wherein the processing module is configured to: when the parity check code comprised in the vehicle data instruction is the same as the parity check code of the decrypted vehicle data, process the decrypted vehicle data.

14. The apparatus according to claim 12 or 13, further comprising:
a second determining module, configured to determine whether transmission of the vehicle data instruction is normal;
wherein the decryption module is configured to: when it is determined that transmission of the vehicle data instruction is normal, decrypt the encrypted vehicle data in the vehicle data instruction.

15. A vehicle multimedia system, comprising:
a closed system, configured to collect original vehicle data, and send a first vehicle data instruction comprising the original vehicle data;
a security chip, comprising the vehicle secure communication apparatus according to any of claims 8 to 11; and
an open system, wherein the open system is connected to the closed system through the security chip, the open system further communicates with a server, and the open system is configured to receive the second vehicle data instruction from the security chip, and forward the second vehicle data instruction to the server.

16. A vehicle, comprising the vehicle multimedia system according to claim 15.
